# EUROPÄISCHE PATENTANMELDUNG

(11) **EP 4 670 582 A1**
(43) Veröffentlichungstag der Anmeldung: **31.12.2025**
(21) Anmeldenummer: 25198022.3
(22) Anmeldetag: 12.10.2022
(51) Int. Cl.: A47J 31/44, A47J 31/46

(54) **MILCHAUFSCHÄUMVORRICHTUNG MIT DRUCKGASBEAUFSCHLAGUNG UND VERFAHREN ZUR HERSTELLUNG VON MILCHSCHAUM**

(30) Priorität: 29.10.2021 DE 102021128339
(62) Teilanmeldung aus: 22801136.7
(71) Anmelder: Eversys S.A., 3960 Sierre (CH)
(72) Erfinder: Robyr, Sébastien, 3960 Sierre (CH); Locher, Grégoire, 1976 Daillon (CH)
(74) Vertreter: Charrier Rapp & Liebau

(57) **Zusammenfassung**

Die Erfindung betrifft eine Milchaufschäumvorrichtung, eine Getränkezubereitungseinrichtung mit der Milchaufschäumvorrichtung sowie ein Verfahren zur Herstellung von Milchschaum. Bei der Herstellung von Kaffeegetränken besteht ein Bedarf für die Erzeugung einer Vielzahl unterschiedlicher Milchmodifikationen. Die Erfindung ermöglicht es, eine große Bandbreite unterschiedlicher Milchmodifikationen zu erzeugen, indem Milch auf einer Auslassseite einer Pumpvorrichtung (2) mit Druckluft beaufschlagt wird. Mittels einer Druckregeleinrichtung (103), die ein in einer Druckgasleitung (DL) angeordnetes Ablassventil (V") zum Ablassen von durch den Kompressor (10) bereitgestelltem Druckgas umfasst, wird das von einem Kompressor (10) bereitgestellte Druckgas teilweise in die Atmosphäre abgelassen, um die in die Pumpvorrichtung (2) eingebrachte Druckgasmenge zu steuern und insbesondere um ein gewünschtes Mischungsverhältnis von Luft zu Milch einzustellen.

## Beschreibung

Die Erfindung betrifft eine Milchaufschäumvorrichtung nach dem Oberbegriff des Anspruchs 1, eine Getränkezubereitungseinrichtung sowie ein Verfahren zur Erzeugung von aufgeschäumter Milch (Milchschaum). Unter Milch sind neben tierischen Milcherzeugnissen, d.h. Drüsensekreten weiblicher Tiere der Klasse *Mammalia*, auch pflanzenbasierte Milcherzeugnisse sowie vergleichbare Produkte zu verstehen, z.B. Sojamilch oder Mandelmilch.

Zur Herstellung von warmen und kalten Milch- oder Milchmischgetränken wie Cappuccino oder Latte Machiatto wird Milch nicht nur in flüssiger Form, sondern auch in aufgeschäumter Form verarbeitet. Die Aufschäumung der Milch erfolgt dabei gewöhnlich über mechanische Agitation der Milch in Rührwerken, durch Beaufschlagung der Milch mit Wasserdampf und/oder durch Beimengung von Luft in einen durch eine Venturi-Düse strömenden Milchstrom. Zur Herstellung einer breiten Anzahl von Milch- und Milchmischgetränken ist es erforderlich, unterschiedliche Milchmodifikationen, bspw. Milch in kalter oder heißer Form sowie in aufgeschäumter oder nicht aufgeschäumter Form, bereitzustellen, wobei es gewünscht sein kann, Schaumeigenschaften (Wassergehalt, Schaumblasengröße, Dichte u.s.w.) sowie die Temperatur der Milchmodifikation zu kontrollieren und gezielt einstellen zu können, um das ästhetische und glossa-taktile wie auch das geschmackliche Empfinden zu beeinflussen.

Der Milchschaum kann, wie bspw. bei einem Latte Macchiato, Bestandteil eines Milchmischgetränkes sein oder, wie bei einem Cappuccino, eine Schaumkrone auf dem Getränk ausbilden. Unterschieden werden kann beispielsweise zwischen einem festen, dichten und grobporigen Schaum und einem feinporigen Milchschaum. Der grobporige Milchschaum ist bei Herstellung einphasig, und wandelt sich nach einer gewissen Standzeit in einer Tasse in einen zweiphasigen Milchschaum aus einer unteren flüssigen Schicht aus heißer Milch und der darauf aufliegenden Schicht aus festem Milchschaum zusammen. Dieser grobporige Milchschaum kann bspw. zur Herstellung von Latte Macchiato verwendet werden. Für die Erzeugung von Verzierungen im Milchschaum (Latte Art) auf einem Cappuccino ist dieser grobporige feste Schaum allerdings nicht geeignet. Hierfür kann ein eher flüssiger, cremiger und feinporiger Milchschaum eingesetzt werden, der aus mikrofeinen Luftbläschen besteht und auch als Mikroschaum bezeichnet wird. Dieser Mikroschaum ist vorzugsweise einphasig mit einer seidig glänzenden Oberfläche und enthält sehr kleine, gleichmäßig im Schaum verteilte Luftbläschen, die mit bloßem Auge kaum zu erkennen sind. Beim Aufgießen dieses Mikroschaums auf die eine Crema enthaltende Oberfläche eines (Espresso-)Kaffees findet eine teilweise Vermischung der Crema und des Milchschaums statt, die zu einer Verfärbung des weißen Milchschaums mit der dunklen Crema des Kaffees führt. Dies ermöglicht es, Bilder auf der Schaumoberfläche zu zeichnen (Latte Art).

Es ist bekannt, Schaumeigenschaften bei der Schaumherstellung in Vorrichtungen zur Aufschäumung von aufschäumbaren Flüssigkeiten, wie z.B. Milch, zu beeinflussen. Es ist auch bekannt, die Konsistenz von hergestelltem Schaum nachträglich zu verändern. Die Veränderung der Schaumeigenschaften kann z.B. in einem Kaffeeautomaten durch eine Nachbearbeitungsvorrichtung wie sie in der EP 2 798 988 B1 beschrieben ist, erreicht werden. Dabei wird Milch unter einem vorausgewählten Druck durch ein von Prallkörpern umgebenes Kanallabyrinth geführt, um die Luftblasen des Schaums zu vereinheitlichen und dadurch die Konsistenz des Schaums zu vergleichmäßigen. Durch Einstellung von Druckverhältnissen in der Nachbearbeitungsvorrichtung ist es außerdem möglich, die Konsistenz des Milchschaumes von fein, d.h. mit sehr kleinen Luftblasen, bis grob, d.h. mit großen Luftblasen und von locker über cremig bis fest zu verändern.

Spezifische Schaumeigenschaften können daher bei der bekannten Nachbehandlungsvorrichtung - ohne eine Veränderung der Nachbehandlungsvorrichtung - nur über die Einstellung von Druckverhältnissen (d.h. durch höhere Drücke einer Dampfzuleitung) erfolgen, was nachteilig hinsichtlich einer Verwässerung und/oder Überhitzung des Schaumes (Gerinnung von Milcheiweiß) sein kann.

Weiterhin werden immer mehr unterschiedliche Milchausgangsprodukte wie fettreduzierte Milch, laktosefreie Milch, sowie pflanzliche Milchersatzstoffe wie Soja- und Mandelmilch angeboten. Diese Milchausgangsprodukte zur Herstellung von Milchschaum weisen unterschiedliche Verarbeitungseigenschaften (Fettanteile, Schäumbarkeit, Erhitzbarkeit, Viskosität, etc.) auf, so dass es notwendig sein kann, die Herstellungsparameter bei der Zubereitung von Milchschaum dem Milchausgangsprodukt anzupassen, um einen Milchschaum mit gleichbleibenden bzw. vergleichbaren Eigenschaften herzustellen.

Die Vermischung eines Luft-Milch-Gemisches nach Anreicherung der Milch mit Luft über eine Venturi-Düse in einer Wirbelkammer zeigt die EP 3 763 258 A1. Die aufgeschäumte Milch kann im Anschluss über einen Durchlauferhitzer temperiert werden. Nachteilig ist, dass Schaumeigenschaften dabei nur bedingt kontrolliert werden können. Insbesondere ist es mit der in der EP 3 763 258 A1 gezeigten Vorrichtung nicht möglich, unterschiedliche Schaumarten, wie z.B. feinporigen und grobporigen Schaum, herzustellen.

Die EP 2 156 771 A1 lehrt zum Aufschäumen von Milch einen Gasstrom, insbesondere einen Luftstrom, und einen Milchstrom zu vereinigen und gemeinsam auf einer Einlassseite in eine Pumpe, insbesondere eine Zahnradpumpe, einzubringen, wobei das Gas-Milch-Gemisch bei Passage der Zahnradpumpe zu einem Milchschaum aufgeschäumt wird. Der Milchschaum kann auf der Auslassseite der Pumpe anschließend durch Beaufschlagung mit Dampf erhitzt werden. Mit dieser bekannten Milchaufschäumvorrichtung kann sowohl kalter als auch warmer Milchschaum erzeugt werden, wobei eine einfache Reinigung der Vorrichtung mit Dampf möglich ist. Das Einbringen des Gemisches aus Milch und Gas auf der Einlassseite der Pumpe kann jedoch zu Störungen des Pumpbetriebs und insbesondere zu einem Rutschen einer bevorzugt als Pumpe eingesetzten Zahnradpumpe und zu einer ruckartigen Ausgabe des Milchschaums auf der Auslassseite der Pumpe führen. Auch ein Pumpenverschleiß fällt kavitationsbedingt hoch aus.

Vor diesem Hintergrund hat es sich die Erfindung zur Aufgabe gemacht, eine Milchaufschäumvorrichtung, eine Getränkezubereitungseinrichtung mit einer solchen Milchaufschäumvorrichtung sowie ein Verfahren zur Herstellung von Milchschaum bereitzustellen, mit welcher störungsfrei und in schneller zeitlicher Abfolge Milchschäume mit einstellbaren Eigenschaften hergestellt und mit einem gleichbleibenden Volumenstrom ausgegeben werden können. Dabei sollen bevorzugt auch unterschiedlichste Arten von Milchmodifikationen, wie kalte oder warme Milch sowie kalter oder warmer Milchschaum, mit auf unterschiedliche Milchausgangsprodukten (Kuhmilch, laktosefreie Milch, Mandelmilch, Hanfmilch, Sojamilch, Kängurumilch, usw.) angepassten Herstellungsparametern bei frei einstellbaren Volumenströmen hergestellt werden können. Gleichzeitig soll eine hohe Funktionsintegration bei geringer Baugröße und wenigen Teilen, eine hohe Standzeit und ein geringer Wartungsaufwand realisiert werden.

Diese Aufgaben werden gelöst durch eine Milchaufschäumvorrichtung mit den Merkmalen des Anspruchs 1, durch eine Getränkezubereitungseinrichtung mit den Merkmalen nach Anspruch 12 sowie ein Verfahren mit den Merkmalen des Anspruchs 13.

Die erfindungsgemäße Milchaufschäumvorrichtung umfasst eine Pumpvorrichtung mit einer Einlassseite und einer Auslassseite zum Fördern von Milch von der Einlassseite auf die Auslassseite. Auf der Einlassseite kann eine Milchzuleitung angeschlossen werden, so dass insb. gekühlte Milch aus einem Vorratsbehälter in die Pumpvorrichtung eingebracht und über die Auslassseite abgegeben werden kann. Die Auslassseite kann zur Abgabe des Milchschaums mit einer Milchausgabeleitung verbunden sein. Die Milchaufschäumvorrichtung zeichnet sich dadurch aus, dass auf der Auslassseite der Pumpvorrichtung ein Gaszugang zum Einleiten eines Druckgases zum Aufschäumen der Milch angeordnet ist. Als Druckgas werden hierbei lebensmittelverträgliche komprimierte Gase, wie Luft, Stickstoff, Sauerstoff, Kohlendioxid oder Distickstoffmonoxid (N₂O), eingesetzt.

Bei dem Druckgas handelt es sich bevorzugt um ein zumindest im Wesentlichen wasserfreies, komprimiertes Gas oder Gasgemisch mit einer Temperatur von kleiner 100°C, bevorzugt weniger als 80° C, und insbesondere kleiner 40°C, wobei das Druckgas besonders bevorzugt komprimierte Luft, komprimierter Stickstoff, komprimierter Sauerstoff oder komprimiertes Kohlendioxid oder eine Mischung davon ist und insbesondere weder Wasserdampf noch Nassdampf ist. Nicht unter den Begriff des Druckgases fallen soll heißer Wasserdampf, der üblicherweise über einen Dampfgenerator, bspw. einen Siedekessel, bereitgestellt wird. Nicht unter den Begriff "Druckgas" fallen soll auch Nassdampf, d.h. Gas mit einem Wassergehalt oberhalb des Sättigungslimits des Gases an Wasser.

Im Rahmen der Erfindung ist unter Druckgas insb. ein im Wesentlichen wasserfreies Druckgas zu verstehen, d.h. ein unter Druck gesetztes, komprimiertes Gas oder Gasgemisch, dessen Wassergehalt nicht absichtlich erhöht wurde. Ein Beispiel für ein im Wesentlichen wasserfreies Druckgas im Sinne der Erfindung ist komprimierte Umgebungsluft, die einen Anteil an Wasser in Form der natürlichen Luftfeuchtigkeit enthält.

Die Vermengung der Milch mit dem Druckgas, erfolgt dabei auslassseitig auf der Hochdruckseite der Pumpvorrichtung. Durch die Beaufschlagung der Milch mit dem Druckgas auf der Auslassseite wird die Funktion der Pumpvorrichtung durch das Druckgas nicht negativ beeinflusst und es wird insbesondere ein Rutschen oder Schlupfen der Pumpvorrichtung verhindert und eine gleichmäßige Ausgabe von Milchschaum auf der Auslassseite ermöglicht. Ferner kann die Fördergeschwindigkeit der Milch und damit die Förderleistung der Pumpvorrichtung unabhängig von den Schaumeigenschaften eingestellt werden. Indem bei unterschiedlichen Fördergeschwindigkeiten das Druckgas mit unterschiedlichen Speisedrücken und damit in unterschiedlicher Menge zugeführt wird, können sowohl feinporiger als auch grobporiger Milchschaum hergestellt werden. Ohne Druckgasbeaufschlagung kann die Milchaufschäumvorrichtung auch als Förderpumpe für die Milch eingesetzt werden, ohne Milchschaum zu erzeugen. Andere und insb. separate Fördermittel oder die Verwendung von unterschiedlichen Milchaufschäumvorrichtungen zur Erzeugung unterschiedlicher Milchschäume sind daher entbehrlich.

Einlassseite und Auslassseite sind im Wesentlichen synonym zu Niederdruck- und Hochdruckseite der Pumpvorrichtung zu verstehen. "Auf der Auslassseite" ist daher "als der Hochdruckseite zugordnet" zu verstehen. Der Gaszugang zum Einleiten des Druckgases kann dabei auslassseitig innerhalb oder außerhalb eines Gehäuses der Pumpvorrichtung angeordnet sein.

Weitere Merkmale und vorteilhafte Ausführungsformen der Erfindung ergeben sich aus den Unteransprüchen und der nachfolgenden Beschreibung.

Die Milchaufschäumvorrichtung weist vorzugsweise keinen Gaszugang auf der Einlassseite der Pumpvorrichtung zur Einleitung des oder eines Druckgases zum Aufschäumen der Milch auf. Ausführungsformen, die auf der Einlassseite der Pumpvorrichtung Milch über die Einleitung eines Druckgases aufschäumen, fallen nicht unter diese Ausführungsform der Erfindung.

In einer vorteilhaften Ausführungsform umfasst die Pumpvorrichtung der Milchaufschäumvorrichtung wenigstens ein Gehäuse, in dem mechanisch bewegte Fördermittel in einer Förderkammer angeordnet sind. In dem Gehäuse sind mindestens eine erste und eine zweite Zugangsöffnunge und mindestens eine erste Abgangsöffnung vorgesehen. Die erste Zugangsöffnung ist dabei auf der Einlassseite stromaufwärts, also in Förderrichtung der Milch vor dem Fördermittel angeordnet und bildet einen Einlass für Milch in das Gehäuse der Pumpvorrichtung. Die Abgangsöffnung ist auf der Auslassseite stromabwärts, also in Förderrichtung der Milch hinter dem Fördermittel angeordnet und bildet einen Auslass aus der Förderkammer zur Abgabe des Milchschaums. Eine zweite Zugangsöffnung ist auslassseitig und vorzugsweise im Bereich der Fördermittel angeordnet. Über die zweite Zugangsöffnung wird das Druckgas in die Förderkammer zum Aufschäumen der Milch eingeleitet. Die zweite Zugangsöffnung bildet den Gaszugang.

Indem die Einspeisung des Druckgases auslassseitig vorzugsweise innerhalb des Gehäuses, insb. innerhalb der Förderkammer der Pumpvorrichtung erfolgt, können neben schaumbildenden Vermischungseffekten durch die Druckgaseinspeisung auch durch die Fördermittel erzeugte Verwirbelungseffekte vorteilhaft zum Aufschäumen der Milch genutzt werden. Der Einspeisedruck des Druckgases kann dadurch vergleichsweise niedrig gehalten werden, da die kinetische Energie zum Aufschäumen der Milch nicht allein druckbedingt erfolgen muss.

Bei der Pumpvorrichtung handelt es sich bevorzugt um eine Pumpvorrichtung mit mechanischen Fördermitteln. Als Pumpvorrichtungen können kontinuierlich (z.B. Zahnradpumpen) oder zyklisch arbeitende (z.B. Kolben-, Membranpumpen) Verdrängerpumpen eingesetzt werden.

Bevorzugt ist die Pumpvorrichtung als Zahnradpumpe, speziell als Außenzahnradpumpe oder als Innenzahnradpumpe ausgebildet. Eine Zahnradpumpe umfasst jeweils zwei ineinander kämmende und um zwei parallel angeordnete Drehachsen drehbar angeordnete Zahnräder, deren Zähne bei Eingriff jeweils abgegrenzte Fördervolumina bereitstellen. Zahnradpumpen weisen geringe Trägheitsmomente und eine hohe Steuerdynamik auf. Durch ihr schnelles Ansprechverhalten sind auch geringe Fördermengen von Milch (shots) bei hohen Förderdrücken erzielbar. Dadurch kann eine gewünschte Druckdifferenz auf der Auslassseite der Förderkammer nahezu instantan, d.h. ohne eine Druckaufbauphase, hergestellt werden. Dies reduziert Ausschussmengen mit ungenügender Qualität. Andere Pumparten wie Zahnringpumpen, Membranpumpen oder Kolbenpumpen können ebenfalls eingesetzt werden.

Eine zweckmäßige Anordnung der zweiten Zugangsöffnung im Bereich der Fördermittel der Pumpvorrichtung umfasst dabei sowohl eine Anordnung, in der die zweite Zugangsöffnung keinen mechanischen Kontakt zu den Fördermitteln der Pumpvorrichtung hat - beispielsweise durch Anordnung radial außerhalb eines Kopfkreisdurchmessers eines als Zahnrad ausgebildeten Fördermittels - oder eine Anordnung, in der die zweite Zugangsöffnung einen mechanischen Kontakt zu den Fördermitteln der Pumpvorrichtung hat, nämlich derart, dass die Zugangsöffnung zyklisch von sich bewegenden Förderelementen der Pumpvorrichtung überdeckt und wieder freigeben wird, beispielsweise indem die Zugangsöffnung radial zwischen einem Fußkreisdurchmesser und einem Kopfkreisdurchmesser eines als Zahnrad ausgebildeten Fördermittels einer Zahnradpumpe angeordnet ist. Durch eine zyklische Freigabe der Zugangsöffnung ist eine pulsierende Druckgasbeaufschlagung möglich. Die Fördermittel der Pumpvorrichtung und die zweite Zugangsöffnung bilden dabei ein Stotterventil ohne zusätzliche Bauteile.

Es kann zweckmäßig sein, wenn die Abgangsöffnung eine Düse und/oder ein Drosselventil umfasst bzw. als solche/s ausgebildet ist. Dadurch lässt sich der Druck in der Förderkammer auf der Auslassseite kontrolliert einstellen.

Ebenso ist es vorteilhaft, wenn die zweite Zugangsöffnung eine Düse und/oder ein Drosselventil umfasst bzw. als solche/s ausgebildet ist. Durch eine zweckmäßig gewählte Düsenform können hydrostatische Druckanteile des an der Zugangsöffnung anliegenden Druckes des Druckgases bei Passage der Düse z.B. vorteilhaft in dynamische Druckanteile umgewandelt werden. Hierdurch kann das Druckgas unter hohen Differenzgeschwindigkeiten in die Milch eingebracht und damit eine exzellente Vermischung erzielt werden. Die Düse bzw. das Drosselventil können dabei integral als Öffnung in einem Gehäuse der Pumpvorrichtung ausgebildet sein. Vorteilhaft handelt es sich jedoch um separate in dem Gehäuse eingesetzte und austauschbare Teile, bspw. einen Buchseneinsatz. Durch die Verwendung von austauschbaren Buchseneinsätzen kann die Milchaufschäumvorrichtung auch noch nachträglich an veränderte Herstellungsparameter angepasst werden.

Um eine möglichst gute Homogenisierung des Milchschaumes zu erreichen, insbesondere mit einer gleichmäßigen Blasengröße von Blasen mit homogener Verteilung in dem Milchschaum, ist die zweite Zugangsöffnung (Gaszugang) bevorzugt in unmittelbarer Nähe des Zahneingriffs der Zahnräder auf der Auslassseite einer Zahnradpumpe angeordnet. Durch eine möglichst zahnradnahe Einbringung kann das Druckgas durch sich verkleinernde Fördervolumina der Zahnräder verdrängt und dadurch in Strömungsrichtung der Milch, d.h. in Richtung der Abgangsöffnung, beschleunigt werden.

Das Druckgas wird bevorzugt senkrecht oder tangential zur Strömungsrichtung der Milch in den Milchstrom eingebracht. Ein Einbringen des Druckgases entgegen der Strömungsrichtung oder Mischformen, z.B. eine schräge Einbringung, sind ebenfalls möglich. Eine Einbringung entgegen der Strömungsrichtung der Milch ist vorteilhaft, wenn eine hohe Verwirbelung und eine gute Durchmischung zwischen dem über die zweite Zugangsöffnung eingespeisten Druckgas und der Milch zur Erzeugung einer hohen Schaumqualität erwünscht ist.

In einer vorteilhaften Ausführungsform kann die Pumpvorrichtung mehr als zwei Zugangsöffnungen und insbesondere mehrere Gaszugänge umfassen. Die Zugangsöffnungen, welche die Gaszugänge ausbilden, können vorteilhaft einander gegenüberliegend und aufeinander zugerichtet in dem Gehäuse der Pumpvorrichtung angeordnet sein. Alternativ oder zusätzlich ist es aber ebenso möglich, mehrere Zugangsöffnungen neben- oder übereinander anzuordnen. Durch mehrere Gaszugänge lassen sich Aufschäumraten und damit ein Milchschaumdurchsatz bei näherungsweise gleichbleibender Baugröße der Pumpvorrichtung erhöhen.

Die erste Eingangsöffnung und die Ausgangsöffnung können parallel und insbesondere koaxial angeordnet sein. Vorteilhaft ist jedoch, wenn die Ausgangsöffnung parallel versetzt zu der Eingangsöffnung angeordnet ist. Hierdurch entstehen Pralleffekte, die eine Vermischung und damit die Schaumbildung der Milch positiv beeinflussen.

Das Gehäuse der Pumpvorrichtung umfasst zweckmäßig eine vorzugsweise plane Unterseite, eine parallel im Abstand dazu verlaufende und vorzugsweise plane Oberseite und wenigstens eine, vorzugsweise senkrecht dazu angeordnete Seitenwand. Die Seitenwand kann umlaufend, insbesondere zylindrisch ausgebildet sein. Das Gehäuse kann jedoch auch als Polygon mit mehreren Seitenwänden, insbesondere quaderförmig mit vier senkrecht zueinander stehenden Seitenwänden, ausgebildet sein. Die Seitenwände begrenzen dabei die Förderkammer. Die erste Zugangsöffnung und die Abgangsöffnung sind zweckmäßig mittig in der umlaufenden Seitenwand an jeweils gegenüberliegenden Stellen ausgebildet oder in zwei gegenüberliegenden Seitenwänden angeordnet. Die zweite Zugangsöffnung ist vorzugsweise in der Oberseite und/oder Unterseite des Gehäuses angeordnet. Die Fördermittel sind vorzugsweise drehbar um sich zwischen der Ober- und der Unterseite erstreckenden Drehachsen gelagert.

Die Zugangsöffnungen und/oder die Abgangsöffnung gehen vorteilhaft jeweils in einen in dem Gehäuse befindlichen Fluidkanal über, wobei jeder Fluidkanal einen von einem Öffnungsquerschnitt der Zugangs- bzw. Abgangsöffnung unterschiedlichen Querschnitt ausbilden kann. An einem ersten Fluidkanal kann eine Milcheinlassleitung, an einem dritten Fluidkanal kann eine Milchauslassleitung und an einem zweiten Fluidkanal kann eine Druckgasleitung angeschlossen werden. Die Leitungen sind zweckmäßig als Schlauchverbindungen mit entsprechenden Schnellkupplungselementen zur Verbindung mit den Fluidkanälen ausgebildet.

Es ist zweckmäßig vorgesehen, dass zumindest in dem zweiten Fluidkanal ein Rückschlagventil angeordnet ist. Durch dieses Rückschlagventil kann ein Rückfluss von Milch in die Druckgasleitung verhindert werden. Rückschlagventile können auch in dem ersten und dem dritten Fluidkanal angeordnet sein. Dies birgt den Vorteil einer hohen Funktionsintegration, so dass u.a. kürzere Anschluss- bzw. Schlauchwege für z.B. die Milchzuleitung und die Milchausgabeleitung möglich werden.

In einer vorteilhaften Ausführungsform weist der zweite Fluidkanäle eine weitere Öffnung mit einem sich daran anschließenden weiteren Kanal zur Ausbildung einer Verzweigung auf. Über den weiteren Kanal kann Wasser oder eine Reinigungsflüssigkeit für Reinigungszwecke in das Gehäuse eingespeist werden. Hierdurch kann bspw. eine Reinigung der auslassseitigen Förderkammer bzw. von daran angeschlossenen Leitungen durchgeführt werden.

Der zweite Öffnungszugang kann einen Öffnungsdurchmesser von maximal 10 mm, vorzugsweise max. 5 mm, oder besonders bevorzugt maximal 0,05 mm aufweisen. Große Öffnungsdurchmesser erlauben hohe Massendurchsätze, erfordern aber entsprechend leistungsfähige Druckgasquellen. Kleine Durchmesser ermöglichen hohe Druckdifferenzen bei der Einspeisung des Druckgases in die Förderkammer und erlauben eine exzellente Schaumbildung.

Bei Verwendung mehrerer Zugangsöffnungen zur Ausbildung vom mehr als zwei Gaszugängen können diese auch mit unterschiedlichen Durchmessern ausgebildet sein. Die Zugangsöffnungen können fluidisch parallel geschaltet sein und entweder gemeinsam oder - über ein elektronisches Steuerventil - separat mit Druckgas beaufschlagt werden. Die separate Ansteuerung unterschiedlicher Zugangsöffnungen mit unterschiedlichen Öffnungsdurchmessern ermöglicht es, größere Bandbreiten an unterschiedlichen Milchschäumen, insbesondere Milchschäume mit besonders großer und besonders kleiner Porengröße, mit derselben Milchaufschäumvorrichtung zu erzeugen.

Ferner ist es vorteilhaft, wenn der erste Öffnungszugang einen ersten Öffnungsdurchmesser und die Abgangsöffnung einen dritten Öffnungsdurchmesser aufweist, wobei der dritte Öffnungsdurchmesser kleiner ist als der erste Öffnungsdurchmesser. Hierdurch kann auf besonders einfache Weise eine Staudruckerhöhung auf der Auslassseite der Förderkammer realisiert werden. Dies beeinflusst die Schaumbildung vorteilhaft.

Um Druckgas über den Druckgaszugang zur Verfügung zu stellen, ist in einer vorteilhaften Ausführungsform der Druckgaszugang mit einem Kompressor zur Erzeugung von unter Druck stehendem Druckgas verbindbar oder verbunden. Kompressor meint dabei eine Verdichtermaschine, die ein Gas durch mechanische Arbeit verdichtet. Anstelle eines Kompressors kann auch eine andere Druckgasquelle, insb. ein Druckgaszylinder, etwa eine Druckflasche, Verwendung finden. Durch die Verwendung eines Druckgaszylinders kann die Druckgasversorgung vereinfacht werden, erfordert im Gegenzug jedoch einen regelmäßigen Austausch des Druckgaszylinders.

Das Druckgas kann in einer Ausführungsform unter einem näherungsweise konstanten und absoluten Speisedruck zugeführt werden, vorzugsweise einem Speisedruck von mindestens 3 bar, insbesondere im Bereich von 4 bar bis 10 bar, und besonders bevorzugt von mindestens 6 bar. Ein zeitlich konstant bleibender Speisedruck ist technisch besonders einfach zu realisieren. Insbesondere bei geringem Milchdurchfluss kann jedoch auch 1 bar oder weniger ausreichend sein, um z.B. Mikroschaum herzustellen.

In einer vorteilhaften Ausführungsform wird das Druckgas unter einem Zuführdruck (Speisedruck) bereitgestellt, der z.B. um mehr als 0%, vorzugsweise um mehr als 15%, 30% oder 50% höher liegt, als der Druck auf der Auslassseite der Milchaufschäumvorrichtung, wenn kein Druckgas zugeführt wird. Insbesondere ein relativer Zuführdruck von mindestens 30% über dem dynamischen Druck des Milchstroms auf der Auslassseite gewährleistet eine homogene Verteilung des Druckgasstroms in dem Milchstrom und hat weiterhin den Vorteil, dass das Schaumbild des Milchschaumes je nach vorliegender Druckdifferenz verändert werden kann. Wenn die Pumpvorrichtung mit variablen Fördergeschwindigkeiten arbeitet, erfordert dies außerdem einen zusätzlichen Regelaufwand der Druckgasquelle.

Um die zugeführte Druckgasmenge und/oder den dynamischen Druck des zugeführten Druckgases gezielt einregeln zu können, ist es von Vorteil, wenn die Milchaufschäumvorrichtung eine Druckregeleinrichtung (Regeleinrichtung) umfasst.

Die Druckregeleinrichtung umfasst ein Ablassventil zum Ablassen von durch den Kompressor bereitgestelltem Druckgas. Das Ablassventil ist in der Druckgasleitung angeordnet. Hierdurch kann die Bandbreite der bereitgestellten Luftmenge gegenüber einer Regeleinrichtung mit einem schnell schaltenden Sperrventil vergrößert werden.

Die Druckregeleinrichtung kann in einer Ausführungsform zusätzlich ein z.B. elektromagnetisch regelbares Proportionalventil umfassen, das zwischen dem Kompressor und dem Gaszugang angeordnet ist. Dies ermöglicht eine einfache Ansteuerung und präzise Kontrolle des Einspeisedrucks des Druckgases.

Zusätzlich kann die Druckregeleinrichtung auch ein in hoher Taktzahl sich öffnendes und schließendes Sperrventil (auch: Stotterventil) umfassen, wobei das Sperrventil zwischen dem Kompressor und dem Gaszugang angeordnet ist. Das Sperrventil wird nach dem Prinzip einer Pulsweitenmodulation mit hoher Taktzahl geöffnet und geschlossen, so dass ein mittlerer Einspeisedruck des Druckgases erzielbar ist. Außerdem ermöglicht dies eine sehr feine Einstellung der in der Pumpvorrichtung bereitgestellten Druckluftmenge.

Möglich ist auch, die Druckregeleinrichtung unmittelbar mit dem Kompressor zu verbinden und zwar derart, dass der Kompressor selbst ein kurzes Ansprechverhalten aufweist und regelbar ausgestaltet ist, so dass der Kompressor bedarfsabhängig aktiviert, deaktiviert und/oder in seiner Ausgabeleistung angepasst wird. Der Kompressor ist in diesem Fall im Wesentlichen unmittelbar mit dem Gaszugang verbunden.

Eine Kombination der aufgeführten Varianten der Druckregeleinrichtung ist möglich.

Der Kompressor kann ferner mit einem Zwischenspeicher zur Ausbildung eines Druckgasreservoirs ausgebildet sein oder einen solchen umfassen. Über den Zwischenspeicher kann eine Drucklufteinspeisung in die Pumpvorrichtung auch ohne gleichzeitigen Betrieb des Kompressors erreicht werden. Durch die derartige zeitliche Entkopplung von Druckgaserzeugung und Druckgasverwendung können Kompressoren mit geringen Druckgasdurchsatzmenge, aber höheren Wirkungsgraden eingesetzt werden. Außerdem können Schallemissionen während einer Milchschaumherstellung vermieden werden.

Die Erfindung betrifft ferner eine Getränkezubereitungseinrichtung, insbesondere für Kaffee und Kaffee-Mischgetränke, die eine vorbeschriebene Milchaufschäumvorrichtung enthält.

Die Getränkezubereitungseinrichtung umfasst dabei eine Ausgabeeinrichtung zur Ausgabe von Milch in geschäumter und/oder ungeschäumter und/oder in erhitztem und/oder nicht erhitztem Zustand, wobei die Ausgabeeinrichtung zur Ausgabe von Milch vorzugsweise nur und ausschließlich über eine Milchausgabeleitung mit der Auslassseite der Milchaufschäumvorrichtung verbunden ist.

Die Milchaufschäumvorrichtung kann dadurch verschiedene Milcharten für alle Getränke der Getränkezubereitungseinrichtung zur Verfügung stellen. Die Verwendung von unterschiedlichen Milchaufschäumvorrichtungen zur Herstellung unterschiedlicher Milchmodifikationen, wie z.B. flüssige und kalte Milch, flüssige und heiße Milch, kalter Milchschaum oder warmer Milchschaum in unterschiedlichen Texturen (grobporig, feinporig, ...), ist daher nicht mehr notwendig.

Zur Bereitstellung von erhitzter Milch oder erhitztem Milchschaum ist zweckmäßig eine Erhitzungsvorrichtung in der Milchausgabeleitung angeordnet. Die Erhitzungsvorrichtung ist bevorzugt als Durchlauferhitzer, insb. einem elektrischen Durchlauferhitzer, bevorzugt einem Dünnfilm-Durchflusserhitzer (thin film heater), ausgebildet. Die Milch kann dadurch ohne Vermischung mit Wärmeträgerfluiden, wie z.B. heißem Dampf, erhitzt werden. Nachteilige Veränderungen der Schaumqualität durch die Vermengung mit Wärmeträgerfluiden wie Dampf zur Erhitzung, die bspw. eine Verwässerung des Milchschaums hervorrufen, können dadurch vermieden werden.

Die Erhitzungsvorrichtung kann auch als Dampfinjektor zur Einspeisung von heißem Dampf, insbesondere Wasserdampf, in die Milchausgabeleitung ausgebildet sein, wobei der Dampfinjektor mit einer Dampfquelle gekoppelt ist oder eine Dampfquelle umfasst. Auch eine Kombination der Milcherhitzung durch Durchlauferhitzung und Dampfeingabe ist denkbar.

Die Erfindung betrifft ferner auch ein Verfahren zur Erzeugung von aufgeschäumter Milch. Bei dem Verfahren wird in einem Gehäuse einer Pumpvorrichtung befindliche Milch im Bereich von sich bewegenden Fördermitteln, wie z.B. Zähnen einer Zahnradpumpe zur Förderung der Milch, von einer Niederdruckseite der Pumpvorrichtung auf eine Hochdruckseite der Pumpvorrichtung mit einem Druckgas, insbesondere Druckluft, beaufschlagt, indem das Druckgas auf der Hochdruckseite in die Milch eingebracht wird.

Bei dem Druckgas kann es sich um ein zumindest im Wesentlichen wasserfreies und komprimiertes Gas oder Gasgemisch mit einer Temperatur von kleiner als 100°C, bevorzugt weniger als 80° C, und insbesondere kleiner 40°C, handeln. Wenn das Druckgas unter einer niedrigen Temperatur, bspw. weniger als 30°C steht, wird die zugeführte und mit dem Druckgas aufgeschäumte kalte Milch zumindest nicht wesentlich erwärmt, so dass auch kalter Milchschaum erzeugt werden kann. Sofern die Milch erwärmt werden soll, kann zur Erwärmung der Milch jedoch auch gezielt heißes Druckgas verwendet werden, wenngleich dies wegen der geringen Wärmekapazität von im Wesentlichen wasserfreien Gasen mit hohem technischen Aufwand verbunden ist.

Es kann sich bei dem Druckgas um komprimierte Luft (Druckluft) handeln, die mittels eines Kompressors aus angesaugter Umgebungsluft erzeugt wird. Es kann jedoch auch z.B. Stickstoff oder Kohlenstoffdioxid aus einem Druckbehälter als Druckgas eingesetzt werden.

Das Druckgas weist dabei einen Druck auf, der wesentlich höher als der Umgebungsdruck ist.

In einer vorteilhaften Variante des Verfahrens kann die Beaufschlagung der Milch mit dem Druckgas pulsierend erfolgen. Durch die Pulsation können Verwirbelungseffekte während der Einbringung in die Pumpvorrichtung und damit die Schaumbildungsrate erhöht werden. Dies ermöglicht höhere Durchflussgeschwindigkeiten der Milch bei gleichbleibender Schaumqualität, und damit einen höheren Volumenstrom des erzeugten Milchschaums. Eine kontinuierliche, d.h. nicht-pulsierende Einbringung des Druckgases ist möglich.

Die Pulsation kann z.B. mittels eines Stotterventils erreicht werden. Sie kann jedoch auch durch eine dynamisch geregelte Ansteuerung eines das Druckgas bereitstellenden Kompressors erfolgen. Eine Kombination von Stotterventil und geregelter Ansteuerung eines Kompressors ist möglich.

Unter Stotterventil ist ein schnell schaltendes Ventil (Shutter-Valve) zu verstehen, mit dem ein mittlere Druck durch Überlagerung von hohen Druckimpulsen mit niedrigen Druckimpulsen erzielt werden kann. Das Stotterventil ist z.B. elektromagnetisch angesteuert. Unter einer dynamischen Regelung des Kompressors ist insbesondere eine drehzahlvariable Regelung des Kompressors zu verstehen, der einen gewünschten Druck in nahezu Echtzeit zur Verfügung stellt.

Die Druckgasbeaufschlagung kann jedoch auch über eine Zugangsöffnung erfolgen, die so angeordnet ist, dass die Zugangsöffnung zyklisch von sich bewegenden Förderelementen der Pumpvorrichtung überdeckt und wieder freigegeben wird, beispielsweise indem die Zugangsöffnung radial zwischen einem Fußkreisdurchmesser und einem Kopfkreisdurchmesser eines Zahnrads einer Zahnradpumpe angeordnet ist.

Zweckmäßigerweise können Drucksensoren in der Druckgaszuleitung, in dem zweiten Fluidkanal oder in einem auslassseitigen Bereich der Förderkammer vorgesehen sein.

Die Erfindung wird nachfolgend anhand der in den beiliegenden Figuren gezeigten Ausführungsbeispiele exemplarisch beschrieben. Dabei zeigen:
- **Fig. 1**: eine schematische Darstellung einer erfindungsgemäßen Getränkezubereitungsvorrichtung mit einer erfindungsgemäßen Milchaufschäumvorrichtung,
- **Fig. 2**: eine Querschnittsdarstellung einer erfindungsgemäßen Milchaufschäumvorrichtung,
- **Fig. 3A**: eine perspektivische Darstellung einer erfindungsgemäßen Milchaufschäumvorrichtung in einer ersten Perspektive,
- **Fig. 3B**: die erfindungsgemäße Milchaufschäumvorrichtung aus Fig. 3A in einer anderen, Perspektive, sowie
- **Fig. 4**: eine schematische Darstellung einer erfindungsgemäßen Getränkezubereitungsvorrichtung mit einer erfindungsgemäßen Milchaufschäumvorrichtung analog Fig. 1 mit abgewandelter Druckregeleinrichtung.

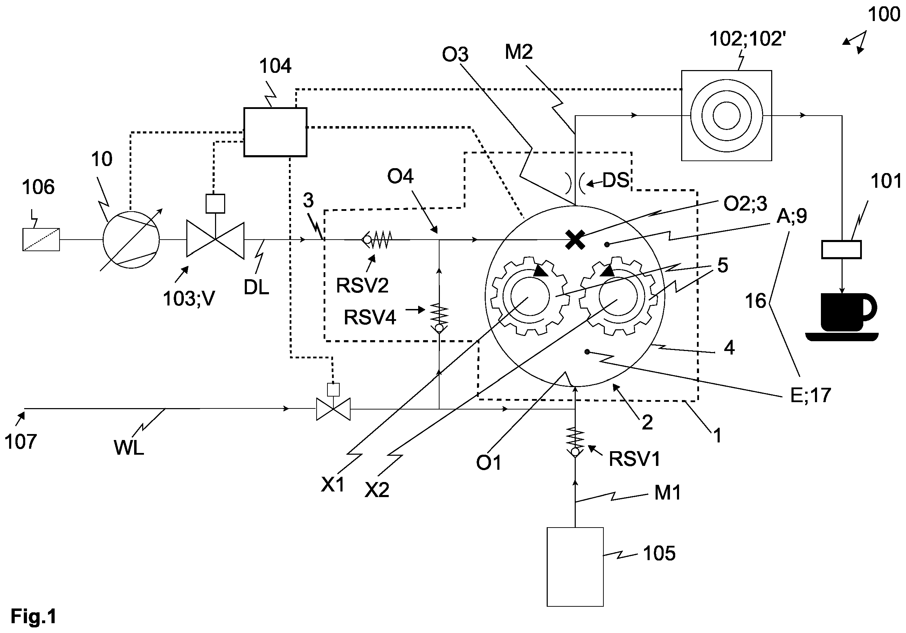

In Fig. 1 ist eine Getränkezubereitungsvorrichtung 100 zur Zubereitung von Kalt- und Heißgetränken auf Kaffee- und Milchbasis mit einem Milchsystem schematisch dargestellt.

Das Milchsystem der Getränkezubereitungsvorrichtung 100 weist einen Milchcontainer 105, eine Milchaufschäumvorrichtung 1 umfassend eine Pumpvorrichtung 2 mit einer Einlassseite E und einer Auslassseite A sowie eine Ausgabeeinrichtung 101 auf. Die Pumpvorrichtung 2 ist auf der Einlassseite E über eine Milchzuleitung M1 mit dem Milchcontainer 105 und auf der Auslassseite A über eine Milchausgabeleitung M2 mit der Ausgabeeinrichtung 101 verbunden. Auf der Auslassseite A ist die Pumpvorrichtung 2 außerdem über eine Druckgasleitung DL mit einem Kompressor 10 verbunden, der Umgebungsluft über einen hier als Luftquelle 106 bezeichnetes Filterelement ansaugt und verdichtet. Die verdichtete Luft (Druckluft) wird über die Druckgasleitung DL und einen Gaszugang 3 in die Pumpvorrichtung 2 geleitet. Zwischen dem Kompressor 10 und der Pumpvorrichtung 2 ist außerdem ein elektromagnetisch von einer Steuereinheit 104 steuerbares Proportionalventil V angeordnet. Die Milchzuleitung M1 ist über einen Abzweig über eine Wasserleitung WL mit einem Wasseranschluss 107 verbunden. Zur Temperierung und Erhitzung von Milch oder Milchschaum ist in der Milchausgabeleitung M2 ferner eine als Durchlauferhitzer 102' ausgebildete Erhitzungsvorrichtung 102 angeordnet.

In der Milchzuleitung M1, der Druckgasleitung DL und der Wasserleitung WL befinden sich Rücklaufhindernisse in Form von Rückschlagventilen RSV1, RSV2 und RSV4, die ein Rücklaufen oder Fehlfördern von Flüssigkeiten verhindern.

Die Pumpvorrichtung 2 umfasst ein Gehäuse 4, das eine Förderkammer 16 mit darin befindlichen Fördermitteln 5 enthält. Die Förderelemente 5 teilen die Förderkammer 16 in eine einlassseitige Speisekammer 17 und eine auslassseitige Mischkammer 9.

Die Getränkezubereitungsvorrichtung 100 kann in , hier beispielhaft angegebenen, vier unterschiedlichen Betriebsmodi betrieben werden, nämlich einem ersten Modus zur Abgabe von kalter, flüssiger Milch, einem zweiten Modus zur Abgabe temperierter, flüssiger Milch, einem dritten Modus zur Abgabe von kaltem Milchschaum sowie einem vierten Modus zur Abgabe von heißem Milchschaum, wobei die Milch oder der Milchschaum jeweils über die Ausgabeeinrichtung 101 in einen Getränkebehälter, bspw. in eine unter einen Auslauf der Ausgabeeinrichtung 101 gestellten Tasse, ausgegeben wird. Zusätzlich weist die Getränkezubereitungsvorrichtung 100 einen Reinigungsmodus auf. Die Getränkezubereitungsvorrichtung 100 wird zur Einstellung der Betriebsmodi und des Reinigungsmodus von einer elektrischen Steuereinheit 104 wie folgt gesteuert.

### Erster Betriebsmodus (kalte Milch)

In dem ersten Modus wird gekühlte Milch aus dem Milchcontainer 105 über die hier als Außenzahnradpumpe ausgeführte Pumpvorrichtung 2 über eine erste Zugangsöffnung O1 im Gehäuse 4 in die Speisekammer 17 der Pumpvorrichtung 2 gesaugt, über Förderelemente 5 in die Mischkammer 9 gefördert und über eine auslassseitige Abgangsöffnung O3 durch ein Drosselelement DS in die Milchausgabeleitung M2 gepumpt, so dass aus der Ausgabeeinrichtung 101 kalte Milch fließt, wenn die Pumpvorrichtung 2 aktiviert ist. Der Durchlauferhitzer 102' ist in diesem Modus ausgeschaltet. Die Milchausgabeleitung M2 könnte zusätzlich auch eine Umgehungsleitung (by-pass) aufweisen, durch die die Milch in dem ersten Betriebsmodus geleitet wird, um eine Durchleitung der Milch durch den Durchlauferhitzer 102' und dadurch eine Erwärmung der Milch durch Restwärme des Durchlauferhitzers 102' zu vermeiden. Die Steuerung 104 aktiviert in diesem Modus nur die Pumpvorrichtung 2.

### Zweiter Modus (warme Milch)

In dem zweiten Modus soll warme Milch über die Ausgabevorrichtung 101 abgegeben werden. Der zweite Betriebsmodus unterscheidet sich vom ersten Betriebsmodus dahingehend, dass die Steuerung 104 den Durchlauferhitzer 102' kurz vor der Aktivierung der Pumpvorrichtung oder gleichzeitig mit der Aktivierung der Pumpvorrichtung aktiviert, so dass Milch während des Durchflusses durch den Durchlauferhitzer 102' erhitzt wird. Die Heizleistung des Durchlauferhitzers sowie die Förderleistung der Pumpvorrichtung 2 zur Beeinflussung der Fließgeschwindigkeit der Milch können in diesem Betriebsmodus von der Steuereinheit 104 je nach gewünschter Zieltemperatur der Milch angepasst werden.

### Dritter Modus (kalter Milchschaum)

In dem dritten Betriebsmodus soll kalter, grobporiger Milchschaum an der Ausgabeeinrichtung 101 ausgegeben werden, der auf einer Getränkeoberfläche schwimmt. Der Durchlauferhitzer 102' ist wie im ersten Betriebsmodus ausgeschaltet oder wird durch eine Umgehungsleitung (by-pass) umgangen. Die Steuereinheit 104 aktiviert zur Herstellung des kalten Schaums gleichzeitig die Pumpvorrichtung 2 und den Kompressor 10. Der Kompressor 10 stellt Druckluft mit einem Druck von z.B. 6 bar zur Verfügung. Die Druckluft wird dann über die zweite Zugangsöffnung O2 auf der Auslassseite A (Hochdruckseite) der Pumpvorrichtung 2 in die Mischkammer 9 eingeblasen, und schäumt die Milch in der Mischkammer 9 auf. Die zweite Zugangsöffnung O2 entspricht einem Gaszugang zum Einleiten des Druckgases aus der Druckgasleitung DL. Die Förderleistung der Pumpvorrichtung 2 ist hierbei so hoch gewählt, dass die Milch auf der Auslassseite A vor dem stromabwärts der Abgangsöffnung O3 befindlichen Drosselelement DS unter einem Druck von z.B. 4 bar gestaut wird. Die aufgeschäumte Milch wird anschließend bei Passage des Drosselelements DS homogenisiert.

Eine Feinjustierung der bereitgestellten Druckluftmenge wird über ein sich in der Druckluftleitung DL (zwischen dem Kompressor 10 und der Zugangsöffnung O2) befindliches Ventil V erreicht. Bei dem Ventil V handelt es sich in einer möglichen Ausführungsform um ein Proportionalventil V einer Druckregeleinrichtung 103, das elektromagnetisch über die Steuereinheit 104 angesteuert wird. Anstelle des Proportionalventils kann auch ein Stotterventil eingesetzt werden, das in schnell iterierender Weise nach Art einer Pulsweitenmodulation, d.h. einem schnell getakteten Öffnen und Schließen des Ventils, angesteuert wird. Durch ein schnell alternierendes Öffnen und Schließen des Ventils kann die Druckluftmenge und der Druck sehr fein gesteuert werden. Außerdem wird die Milch in der Mischkammer pulsierend beaufschlagt, was vorteilhaft für die Milchschaumbildung ist.

Eine weitergehende Steuerung der Menge des in die Milch eingebrachten Druckgases kann über eine Regelung der Pumpleistung der Pumpvorrichtung 2 vorgenommen werden, beispielsweise derart, dass zur Herstellung eines feinporigen Milchschaumes mit hoher Dichte die Pumpleistung der Pumpvorrichtung 2 höher eingestellt wird, als zur Herstellung von grobporigem Milchschaum mit geringer Dichte.

### Vierter Modus (warmer Milchschaum)

In dem vierten Betriebsmodus soll heißer, feinporiger Milchschaum an der Ausgabevorrichtung 101 ausgegeben werden, welcher sich mit einer Crema eines unter dem Auslauf der Ausgabevorrichtung 101 befindlichen Getränkes, bspw. einem Espresso, vermischt. Die Steuereinheit 104 aktiviert hierzu analog zu dem dritten Betriebsmodus die Pumpvorrichtung 2 und den Kompressor 10 und regelt das Ventil V. Sowohl die Förderleistung der Pumpvorrichtung 2 als auch der von dem Kompressor 10 bereitgestellte Druck der Druckluft sind niedriger gewählt als beim dritten Betriebsmodus. Außerdem wird eine Druckdifferenz zwischen der an der Zugangsöffnung O2 anliegenden Druckluft und der in die Mischkammer 9 strömenden Milch gering gehalten, so dass die Druckluft unter einem Überdruck von etwa 10 bis 30 % des Milchdrucks in die Mischkammer 9 eingebracht wird. Hierdurch kann ein hoher Luftanteil in der Milch erreicht bzw. ein sehr feinporiger, homogener Schaum erzeugt werden.

Ferner ist in dem vierten Betriebsmodus der Durchlauferhitzer 102' aktiviert und erhitzt den Milchschaum vor Ausgabe über die Ausgabevorrichtung 101.

### Reinigungsmodus

Die Pumpvorrichtung 2 sowie die Milchausgabeleitung M2 können mit Wasser oder einer Reinigungsflüssigkeit gereinigt werden. Hierzu wird von der Steuereinheit 104 ein Ventil in der Wasserleitung WL geöffnet und die Pumpvorrichtung 2 aktiviert, so dass die Pumpvorrichtung 2 Wasser aus der Wasserleitung WL durch die Mischkammer und in die Milchausgabeleitung M2 pumpen kann.

Zur Reinigung der zweiten Zugangsöffnung O2 des Druckgases wird die Pumpvorrichtung 2 in einem weiteren Schritt des Reinigungsmodus deaktiviert. Ein Durchgang von Flüssigkeit über die Einlassseite E der Pumpvorrichtung 2 durch die Pumpvorrichtung 2 ist dabei durch die stillstehenden Förderelemente 5 blockiert. Über die Wasserleitung WL wird unter Leitungsdruck stehendes Wasser über eine Querleitung zwischen der Wasserleitung WL und der Druckgasleitung DL, in welcher sich ein Rückschlagventil RV4 befindet, durch die zweite Zugangsöffnung O2 in die Mischkammer 9 geleitet und dann über die Abgangsöffnung O3 und die Milchausgabeleitung M2 durch die Ausgabevorrichtung 101 abgeführt. Hierdurch erfolgt eine Reinigung der Abgangsöffnung O3 sowie eines potentiell durch Milchreste verunreinigten Anschlussweges der Druckluftleitung DL.

### Weitere Betriebsmodi

Weitere Betriebsmodi können vorgesehen sein. Beispielsweise ist es möglich, auch heißen, grobporigen Milchschaum oder kalten, feinporigen Milchschaum bereitzustellen, da der Milchschaum kalt geschäumt und erst im Anschluss über den Durchlauferhitzer 102' gegebenenfalls erhitzt wird, so dass die Schaumart (grobporig vs. feinporig) nicht bzw. nicht Wesentlich von der gewünschten Temperatur des Milchschaums an der Ausgabeeinrichtung 101 abhängt.

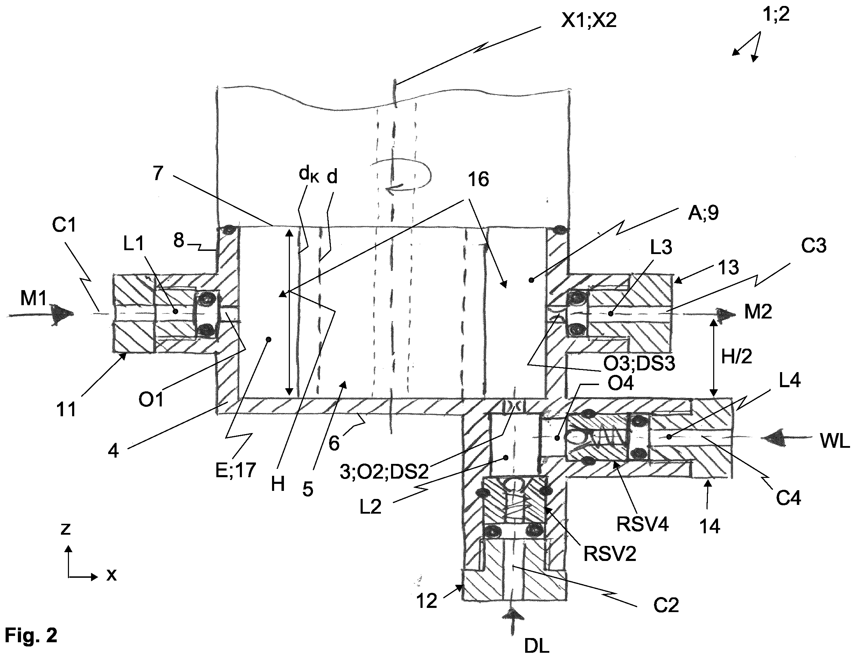

In Fig. 2 ist ein Querschnitt durch eine erfindungsgemäße Pumpvorrichtung 2, wie im Schema der Fig. 1 verwendet, gezeigt: Die Pumpvorrichtung 2 umfasst ein Gehäuse 4 mit einer darin befindlichen Förderkammer 16. Die Förderkammer ist von einer im Wesentlichen planen Unterseite 6, einer parallel im Abstand dazu angeordneten Oberseite (nicht gezeigt) und einer sich senkrecht dazwischen erstreckenden zylindrischen Seitenwand 8 umgeben. In der Förderkammer 16 sind zwei als Zahnräder ausgebildete Fördermittel 5 um jeweils parallele, in der Bildebene hintereinander angeordneten Drehachsen X1, X2 gelagert, wobei die beiden Fördermittel 5 (Zahnräder) miteinander kämmen (Figur 2, Teilkreisdurchmesser d bzw. Kopfkreisdurchmesser d_{K}) und dadurch eine Außenzahnradpumpe ausbilden. Die beiden Fördermittel 5 (Zahnräder) werden über einen hier nicht dargestellten Motor, bspw. einen Elektromotor, angetrieben, wobei unterschiedliche Geschwindigkeiten zur Förderung von Milch von der Einlassseite E zu der Auslassseite A eingestellt werden können. Der Motor ist hierfür elektronisch über die in Fig. 2 referenzierte elektronische Steuereinheit 104 regelbar.

Die Fördermittel 5 teilen die Förderkammer 16 in eine Einlassseite E mit einer Speisekammer 17 und einer Auslassseite A mit einer Mischkammer 9. Die Einlassseite E weist einen einzigen Zugang, nämlich eine erste Zugangsöffnung O1, auf, welche auf etwa halber Höhe H/2 der Speisekammer 17 in der Seitenwand 8 ausgebildet ist. Die erste Zugangsöffnung O1 erstreckt sich als Rundbohrung lotrecht durch die Seitenwand 8 und bildet damit eine als Düse wirkende Engstelle aus. Um die erste Zugangsöffnung O1 ist integral mit dem Gehäuse 4 eine Anschlussbuchse angeordnet, welche einen ersten kreiszylindrischen Fluidkanal L1 mit zentraler Achse C1 ausbildet. In die Anschlussbuchse ist ein Anschlussstück 11 fluiddicht eingebracht, über das die Pumpvorrichtung 2 mit einer als Milchzuleitung M1 ausgebildeten Fluidleitung verbunden werden kann.

Die Auslassseite A der Pumpvorrichtung 2 weist einen einzigen Abgang in Form einer Abgangsöffnung O3 auf, über welche in der Mischkammer 9 befindliches Fluid ausgeleitet werden kann. Die Abgangsöffnung O3 ist als kreiszylindrische Querbohrung in der Seitenwand 8 ausgebildet, wobei in die Querbohrung eine dritte Düse DS3 mit einem veränderlichen Querschnittsprofil eingesetzt ist. Die dritte Düse DS3 bildet ein Drosselelement, über das auch bei geringen Fördergeschwindigkeiten respektive Fördervolumina ein Gegendruck in der Mischkammer 9 aufgebaut werden kann. Analog zur ersten Zugangsöffnung O1 ist außen am Gehäuse 4 um die Abgangsöffnung O3 integral mit dem Gehäuse 4 eine dritte Anschlussbuchse ausgebildet, die einen dritten Fluidkanal L3 mit einer zentralen Achse C3 ausbildet. In der dritten Anschlussbuchse ist ein Anschlussstück 13 zur fluidischen Verbindung der Mischkammer 9 mit der in Fig. 1 gezeigten Milchausgabeleitung M2 eingesetzt.

Wie aus der Fig. 2 ersichtlich, sind die Achse C1 und die Achse C3 respektive die Zugangsöffnungen O1 und O3 auf derselben Höhe in der Seitenwand 8 angeordnet. Eine andere, insb. asymmetrische Anordnung ist möglich.

Die Mischkammer 9 weist bodenseitig in der Unterseite 6 eine zweite Zugangsöffnung O2, auf, die in diesem Fall senkrecht durch die Unterseite 6 verläuft. Die zweite Zugangsöffnung O2 könnte jedoch auch schräg unter einem vorzugsweise spitzen Winkel und vorzugsweise entgegen einer Strömungsrichtung, d.h. auf die Förderelemente 5 ausgerichtet, in die Unterseite 6 eingebracht sein. Durch eine derartige Gestaltung können größere Verwirbelungseffekte (turbulente Strömung) induziert werden, was im Falle von über die zweite Eingangsöffnung O2 eingebrachtem Druckgas zu einer verbesserten Vermischung von dem Druckgas mit der sich in der Mischkammer 16 befindenden Milch bzw. im Falle von eingebrachtem Wasser zu einer verbesserten Reinigung der Mischkammer 16 führt. Um den zum Einbringen des Druckgases notwendige Druck zu verringern, kann die zweite Zugangsöffnung auch in Strömungsrichtung, anstatt gegen oder senkrecht zur Strömungsrichtung, ausgerichtet werden.

Die zweite Eingangsöffnung O2 weist (wie auch die erste Abgangsöffnung O3) ein in die Zugangsöffnung O2 eingesetztes Drosselelement DS2 auf. Mit dem Drosselelement DS2 kann ein Einspritzdruck und eine Einspritzgeschwindigkeit von Druckluft und/oder Wasser kontrolliert werden.

Die zweite Eingangsöffnung O2 geht in einen von einer Anschlussbuchse gebildeten zweiten Fluidkanal L2 über, in welchem ein Rückschlagventil RSV2 und ein Anschlussstück 12 zur Verbindung mit einer in Fig. 1 gezeigten Druckluftleitung DL eingesetzt sind. Der zweite Fluidkanal L2 weist eine Abzweigung mit einer Öffnung O4 auf, die sich in einen vierten Fluidkanal L4 erstreckt. In dem vierten Fluidkanal L4 sind ein Rückschlagventil RSV4 sowie eine Anschlussbuchse 14 zur fluidischen Verbindung mit der in Fig. 1 gezeigten Wasserleitung WL eingesetzt. Die Rückschlagventile RSV2 und RSV4 verhindern einen Rückfluss von in der Mischkammer befindlichen Fluiden in die Druckluftleitung DL bzw. in die Wasserleitung WL.

Das Anschlussstück 12 der Druckluftleitung DL, der zweite Fluidkanal L2 und die zweite Zugangsöffnung O2 sind hierbei koaxial zueinander angeordnet. Hierdurch können Strömungswiderstände minimiert werden. Das Anschlussstück 14 der Wasserleitung WL und die weitere Öffnung O4 sind senkrecht zu dem zweiten Fluidkanal L2 angeordnet.

Die Öffnungsquerschnitte und Öffnungsprofile der Zugangsöffnungen O1, O2, O3 und der weiteren Öffnung O4 können je nach Anforderungsprofil verändert werden, indem die darin eingesetzten Buchsen ausgetauscht werden. Möglich ist beispielsweise die Ausgestaltung der Öffnungen als Standard-Bohrungen, in die je nach Anforderungsprofil unterschiedliche Buchsen mit unterschiedlichen Öffnungsdurchmessern eingesetzt werden können.

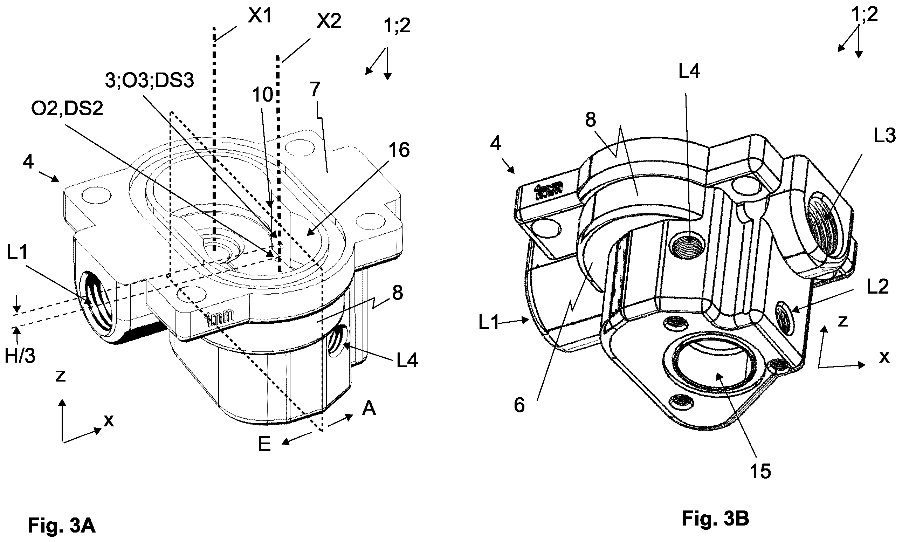

In den Fig. 3A und 3B ist eine Abwandlung der Milchaufschäumvorrichtung 1 aus Fig. 2 in perspektivischen Ansichten gezeigt. Klar erkennbar ist hier die geometrische Ausgestaltung der Förderkammer 16 der Pumpvorrichtung 2 als Überlagerung von zwei Kreiszylindern mit den Rotationsachsen X1 bzw. X2 entsprechenden Achsen. Die Zahnräder der Zahnradpumpe und die dazugehörigen Wellen sind aus Gründen der besseren Übersichtlichkeit nicht dargestellt. Der ebenfalls nicht dargestellte Antrieb in Form eines Motors ist auf der Oberseite 7 des Gehäuses 4 der Pumpvorrichtung 2 angebracht und treibt über ein Untersetzungsgetriebe (nicht dargestellt) eine Welle eines Zahnrades an. Das zweite Zahnrad wird indirekt über das mit ihm kämmende erste Zahnrad angetrieben. Möglich wäre auch ein Tandemantrieb. Die Buchse 15 stellt eine Montageöffnung für das in Fig. 2 gezeigte Rückschlagventil RSV2 dar.

Die Pumpvorrichtung 2 der Fig. 3A und 3B unterscheidet sich von der in Fig. 2 gezeigten Pumpvorrichtung durch die Positionierung der Abgangsöffnung O3. Die Abgangsöffnung O3 ist hier nicht auf halber Höhe, sondern etwa auf Höhe des ersten Drittels H/3 der Höhe der Förderkammer 16 angeordnet. Sie ist damit parallel versetzt gegenüber der ersten Eingangsöffnung O1, die auf halber Höhe (vgl. H/2 in Fig. 2) angeordnet ist.

Wie aus Fig. 3A ersichtlich, ist die zweite Zugangsöffnung O2 an der Unterseite 6 des Gehäuses 4 in unmittelbarer Nähe zu der Seitenwand 8 und unmittelbar vor der Abgangsöffnung O3 angeordnet. Von der Pumpvorrichtung 2 geförderte Milch kann hierdurch unmittelbar bei Eintritt in die Abgangsöffnung O3 mit einem Druckgasstrom beaufschlagt werden.

Bezüglich aller anderen Merkmale der Pumpvorrichtung 2 gemäß Fig. 3A und 3B wird auf die Erläuterungen zum Ausführungsbeispiel der Fig. 2 verwiesen.

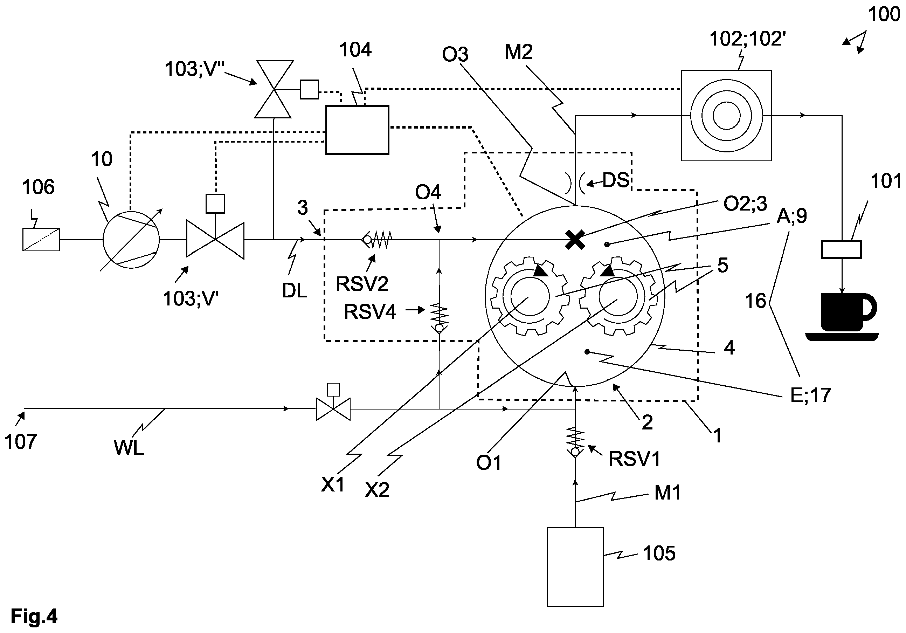

In Fig. 4 ist eine Variante der Milchaufschäumvorrichtung 1 in der in Fig. 1 gezeigten Getränkezubereitungseinrichtung 100 dargestellt: Der wesentliche Unterschied liegt hierbei in der hinter dem Kompressor 10 angeordneten Druckregeleinrichtung 103 zur Steuerung der in die Pumpvorrichtung 2 eingebrachten Druckgasmenge. Anstelle eines in dem Ausführungsbeispiel der Fig. 1 verwendeten Proportionalventils V sind in der Druckgasleitung DL ein offen oder geschlossen schaltbares Sperrventil V' sowie ein in Strömungsrichtung dahinter liegend und in einem Abzweig der Druckgasleitung Dl angeordnetes Ablassventil V" befindlich. Das Sperrventil V' und das Ablassventil V" bilden eine Druckregeleinrichtung 103. Über das Ablassventil V" kann das von dem Kompressor 10 bereitgestellte Druckgas teilweise in die Atmosphäre abgelassen werden. Im Vergleich zur Verwendung eines unmittelbar in der Druckgasleitung befindlichen Proportionalventils oder einem Stotterventil, wie im Ausführungsbeispiel der Fig. 1, kann Druckluft über eine größere Druck-Bandbreite zur Verfügung gestellt werden. Dadurch ist es z.B. möglich ein gewünschtes Mischungsverhältnis von Luft zu Milch über das Ablassventil V" alleine einzustellen, ohne dass zusätzlich auch noch die Pumpleistung der Pumpvorrichtung 2 geregelt bzw. verändert werden muss. Daher kann über eine derartige Druckregeleinrichtung 103 mit einem Ablassventil sowohl sehr grobporigen Schaum mit einer geringen Dichte zur Herstellung einer Schaumkrone auf einem Getränk, und gleichzeitig auch einen sehr feinporigen Schaum (Mikroschaum), der sich gut mit einer Crema eines unter der Ausgabeeinrichtung 101 befindlichen Getränks vermischt, erzeugt werden. Die Steuereinheit 104 regelt die Pumpleistung der Pumpvorrichtung in diesem Ausführungsbeispiel daher lediglich zwischen einer An-Stellung und einer Aus-Stellung.

Das Ablassventil V" ist in der hier gezeigten Ausführung als schnell taktendes Stotterventil ausgebildet. Das Ablassventil V" kann jedoch auch als Proportionalventil ausgebildet sein.

Für die weiteren, im Wesentlichen gleichlaufenden Details der Getränkezubereitungseinrichtung wird auf die Ausführungen zum Ausführungsbeispiel der Fig. 1 weiter oben verwiesen.

Die dargestellte Erfindung stellt u.a. eine konstruktiv sehr einfache, jedoch flexible und zur Herstellung unterschiedlicher Milchmodifikationen nutzbare Milchaufschäumvorrichtung mit hohen Massendurchsätzen zur Verfügung, die in Getränkezubereitungseinrichtungen und - Verfahren verwendet werden kann, wobei ohne eine Beeinträchtigung der Pumpfunktion der in der Milchaufschäumvorrichtung eingesetzten Pumpvorrichtung Milchschäume mit unterschiedlicher Konsistenz und Temperatur mit einer homogenen Zusammensetzung erzeugt und in einem gleichmäßigen Volumenstrom ausgegeben werden können.

### Bezugszeichenliste

- 1: Milchaufschäumvorrichtung
- 2: Pumpvorrichtung
- 3: Gaszugang
- 4: Gehäuse
- 5: Fördermittel
- 6: Unterseite
- 7: Oberseite
- 8: Seitenwand
- 9: Mischkammer
- 10: Kompressor

- 11: Anschlussstück
- 12: Anschlussstück
- 13: Anschlussstück
- 14: Anschlussstück
- 15: Buchse
- 16: Förderkammer
- 17: Speisekammer

- 100: Getränkezubereitungseinrichtung
- 101: Ausgabeeinrichtung
- 102: Erhitzungsvorrichtung
- 102': Durchlauferhitzer
- 103: Druckregeleinrichtung
- 104: Steuereinheit
- 105: Milchbehälter
- 106: Luftquelle
- 107: Wasseranschluss

- A: Auslassseite

- C1: Achse
- C2: Achse
- C3: Achse

- DL: Druckgasleitung
- d: Teilkreisdurchmesser (Zahnrad)
- d_{K}: Kopfkreisdurchmesser (Zahnrad)
- DS: Drosselventil
- DS2: Drosselventil
- DS3: Drosselventil

- E: Einlassseite

- H: Höhe

- L1: Fluidkanal
- L2: Fluidkanal
- L3: Fluidkanal
- L4: Fluidkanal

- M1: Milchzuleitung
- M2: Milchausgabeleitung

- O1: Öffnung (erste Zugangsöffnung)
- O2: Öffnung (zweite Zugangsöffnung)
- O3: Öffnung (Abgangsöffnung)
- O4: Öffnung (Wasserzuleitung)

- RSV1: Rückschlagventil
- RSV2: Rückschlagventil
- RSV4: Rückschlagventil

- V,: Ventil
- V': Ventil
- V": Ventil

- WL: Wasserleitung

- X1: Drehachse
- X2: Drehachse

## Patentansprüche

1. Milchaufschäumvorrichtung (1) umfassend eine Pumpvorrichtung (2) mit einer Einlassseite (E) und einer Auslassseite (A) zum Fördern von Milch von der Einlassseite (E) auf die Auslassseite (A),
- wobei die Einlassseite (E) mit einer Milchzuleitung (M1) verbindbar ist, über welche vorzugsweise kalte Milch in die Pumpvorrichtung (2) eingeleitet wird, wobei die Auslassseite (A) mit einer Milchausgabeleitung (M2) verbindbar ist zur Ausgabe von geschäumter Milch,
- und der Gaszugang (3) mit einem Kompressor (10) zur Erzeugung von unter Druck stehendem Gas verbindbar oder verbunden ist,
**dadurch gekennzeichnet, dass**
- auf der Auslassseite (A) der Pumpvorrichtung (2) ein Gaszugang (3) zum Einleiten eines Druckgases, insb. Druckluft, zum Aufschäumen der Milch angeordnet ist,
- und die Milchaufschäumvorrichtung eine Druckregeleinrichtung (103) umfasst, wobei die Druckregeleinrichtung (103) ein in einer Druckgasleitung (DL) angeordnetes Ablassventil (V") zum Ablassen von durch den Kompressor (10) bereitgestelltem Druckgas umfasst.

2. Milchaufschäumvorrichtung (1) nach Anspruch 1, **dadurch gekennzeichnet, dass** die Pumpvorrichtung (2) ein Gehäuse (4), ein darin angeordnetes Fördermittel (5) sowie mindestens eine erste und eine zweite Zugangsöffnung (O1, O2) und mindestens eine erste Abgangsöffnung (O3) umfasst, wobei die erste Zugangsöffnung (O1) einlassseitig vor dem Fördermittel (5) angeordnet, eine erste Abgangsöffnung (O3) auslassseitig hinter dem Fördermittel (5) angeordnet ist und die zweite Zugangsöffnung (O2) der Gaszugang (3) ist, welcher auslassseitig insb. im Bereich der Fördermittel (5) angeordnet ist.

3. Milchaufschäumvorrichtung (1) nach Anspruch 1, **dadurch gekennzeichnet, dass** das Ablassventil V" als schnell taktendes Stotterventil oder als Proportionalventil ausgebildet ist.

4. Milchaufschäumvorrichtung (1) nach einem der vorhergehenden Ansprüche, **dadurch gekennzeichnet, dass** die Pumpvorrichtung (2) als Zahnradpumpe mit zwei ineinander kämmenden und um zwei parallel angeordnete Drehachsen (X1, X2) drehbar angeordneten Zahnrädern ausgebildet ist, wobei der Gaszugang (3) vorzugsweise in unmittelbarer Nähe des Zahneingriffs der Zahnräder auf der Auslassseite (A) angeordnet ist.

5. Milchaufschäumvorrichtung (1) nach einem der vorhergehenden Ansprüche 2 oder 3, **dadurch gekennzeichnet, dass** das Gehäuse (4) eine Unterseite (6), eine Oberseite (7) und mindestens eine Seitenwand (8) umfasst, wobei die erste Zugangsöffnung (O1) und die Abgangsöffnung (O3) in der oder einer Seitenwand (8) und/oder dass die zweite Zugangsöffnung (O2) in der Oberseite (7) oder der Unterseite (6) des Gehäuses (4) angeordnet ist.

6. Milchaufschäumvorrichtung (1) nach einem der Ansprüche 2 bis 4, **dadurch gekennzeichnet, dass** die Zugangsöffnungen (O1, O2) und/oder die Abgangsöffnung (O3) jeweils in einen jeweiligen in dem Gehäuse (4) befindlichen Fluidkanal (L1, L2, L3) übergehen, wobei der Fluidkanal (L1, L2, L3) zum Anschluss einer Milcheinlassleitung (M1), einer Milchauslassleitung (M2) oder der Druckgasleitung (DL) ausgebildet ist, wobei vorzugsweise in zumindest einem Fluidkanal (L1, L2, L3) ein Rückschlagventil (RSV2, RSV4) angeordnet ist.

7. Milchaufschäumvorrichtung (1) nach einem der Ansprüche 2 bis 5, **dadurch gekennzeichnet, dass** zumindest ein Fluidkanal ( L2) eine weitere Öffnung (O4) mit einem sich daran anschließenden Kanal (L4) zur Ausbildung einer Verzweigung aufweist, über die Wasser in das Gehäuse (4) eingeleitet werden kann.

8. Milchaufschäumvorrichtung (1) nach einem der Ansprüche 2 bis 7, **dadurch gekennzeichnet, dass** die erste Zugangsöffnung (O1) einen ersten Öffnungsdurchmesser und die erste Abgangsöffnung (O3) einen dritten Öffnungsdurchmesser aufweist,
wobei der dritte Öffnungsdurchmesser kleiner ist als der erste Öffnungsdurchmesser.

9. Milchaufschäumvorrichtung (1) nach einem der vorhergehenden Ansprüche, **dadurch gekennzeichnet, dass** das Druckgas unter einem Zuführdruck von mindestens 4 bar, vorzugsweise 6 bar, bereitgestellt wird, und/oderdass das Druckgas unter einem Zuführdruck bereitgestellt wird, der um mehr als 0%, 30% oder auch 50% höher liegt, als der Druck auf der Auslassseite (A) der Milchaufschäumvorrichtung (1), wenn kein Druckgas zugeführt wird.

10. Milchaufschäumvorrichtung (1) nach einem der Ansprüche 1 bis 9, **dadurch gekennzeichnet, dass** die Druckregeleinrichtung (103) ein regelbares Proportionalventil (V) umfasst, das zwischen dem Kompressor (10) und dem Gaszugang (3) angeordnet ist, und/oder ein in hoher Taktzahl sich öffnendes und schließendes Sperrventil (V') umfasst, das zwischen dem Kompressor (10) und dem Gaszugang (3) angeordnet ist, und/oderder Kompressor (10) regelbar ausgestaltet und im Wesentlichen unmittelbar mit dem Gaszugang (3) verbunden ist.

11. Getränkezubereitungseinrichtung (100), insbesondere für Kaffee und Kaffee-Mischgetränke, umfassend eine Milchaufschäumvorrichtung (1) nach einem der vorhergehenden Ansprüche, und eine Ausgabeeinrichtung (101) zur Ausgabe von geschäumter oder ungeschäumter Milch in erhitztem oder nicht erhitztem Zustand, wobei die Auslassseite (A) der Milchaufschäumvorrichtung (1) über eine Milchausgabeleitung (M2) mit der Ausgabeeinrichtung (101) verbunden ist.

12. Getränkezubereitungseinrichtung (100) nach Anspruch 11, **dadurch gekennzeichnet, dass** in der Milchausgabeleitung (M2) eine Erhitzungsvorrichtung (102) angeordnet ist, wobei die Erhitzungsvorrichtung insbesondere als Durchlauferhitzer (102') oder als Dampfinjektor zur Einspeisung von heißem Dampf, insbesondere Wasserdampf, in die Milchausgabeleitung (M2) ausgebildet ist, wobei der Dampfinjektor mit einer Dampfquelle gekoppelt ist oder eine Dampfquelle umfasst.

13. Verfahren zur Erzeugung von aufgeschäumter Milch, wobei in einem Gehäuse (4) einer Pumpvorrichtung (2) befindliche Milch im Bereich von sich bewegenden Fördermitteln (5) zur Förderung der Milch von einer Niederdruckseite der Pumpvorrichtung (2) auf eine Hochdruckseite der Pumpvorrichtung (2) mit einem Druckgas, insbesondere Druckluft, beaufschlagt wird, indem das Druckgas auf der Hochdruckseite in die Milch eingebracht wird, **dadurch gekennzeichnet, dass** mittels einer Druckregeleinrichtung (103), die ein in einer Druckgasleitung angeordnetes Ablassventil (V") umfasst, über welches das von einem Kompressor (10) bereitgestellte Druckgas teilweise in die Atmosphäre abgelassen wird, die in die Pumpvorrichtung (2) eingebrachte Druckgasmenge gesteuert und insbesondere ein gewünschtes Mischungsverhältnis von Luft zu Milch eingestellt wird.

14. Verfahren nach Anspruch 13, **dadurch gekennzeichnet, dass** es sich bei dem Druckgas um ein zumindest im Wesentlichen wasserfreies, komprimiertes Gas oder Gasgemisch mit einer Temperatur von kleiner 100°C, bevorzugt weniger als 80° C, und insbesondere kleiner 40°C, handelt, wobei das Druckgas bevorzugt komprimierte Luft, komprimierter Stickstoff, komprimierter Sauerstoff oder komprimiertes Kohlendioxid oder eine Mischung davon ist und insbesondere nicht Wasserdampf oder Nassdampf ist.

15. Verfahren nach Anspruch 13 oder 14, **dadurch gekennzeichnet, dass** die Beaufschlagung der Milch mit dem Druckgas pulsierend erfolgt, wobei die Pulsation insbesondere mittels eines Stotterventils oder durch dynamisch geregelte Ansteuerung des Kompressors (10) erfolgt.
